# EUROPÄISCHE PATENTSCHRIFT

(11) **EP 2 254 767 B1**
(45) Veröffentlichungstag und Bekanntmachung des Hinweises auf die Patenterteilung: **25.09.2013**
(21) Anmeldenummer: 09712164.4
(22) Anmeldetag: 11.02.2009
(51) Int. Cl.: B60N 2/225, B60N 2/235

(54) **VORVERLAGERBARER KRAFTFAHRZEUGSITZ MIT EINEM RÜCKENLEHNENGELENKBESCHLAG UND RÜCKLEHNENGELENKBESCHLAG**
PREDISPLACEABLE MOTOR VEHICLE SEAT COMPRISING A BACK REST ARTICULATED FITTING AND BACK REST ARTICULATED FITTING
SIEGE DE VEHICULE A MOTEUR POUVANT ETRE PREALABLEMENT DEPLACE, COMPRENANT UNE GARNITURE D'ARTICULATION DE DOSSIER ET GARNITURE D'ARTICULATION DE DOSSIER

(30) Priorität: 22.02.2008 DE 102008010603
(43) Veröffentlichungstag der Anmeldung: 01.12.2010
(73) Patentinhaber: C. Rob. Hammerstein GmbH & Co. Kg, 42699 Solingen (DE)
(72) Erfinder: BECKER, Burckhard, 42657 Solingen (DE); BENEKER, Wilfried, 42799 Leichlingen (DE); MISHURIS, Alexander, 40099 Erkrath (DE)
(74) Vertreter: Bauer Vorberg Kayser Patentanwälte
(86) Internationale Anmeldenummer: PCT/EP2009/051567
(87) Internationale Veröffentlichungsnummer: WO 2009/103641

(56) Entgegenhaltungen:
- EP-A- 0 872 375
- WO-A-2007/087876
- DE-U1- 20 121 469
- US-A1- 2003 080 598

## Beschreibung

Die Erfindung bezieht sich auf einen vorverlagerbaren Fahrzeugsitz nach dem Oberbegriff des Patentanspruchs 1.

Ein derartiger Fahrzeugsitz wird insbesondere als Frontsitz von Kraftfahrzeugen eingesetzt, die nur eine Tür pro Fahrzeugseite haben. Ein derartiger Fahrzeugsitz hat eine Rückenlehne und ein Sitzteil. Er ist in einer Längsführung in Längsrichtung verschiebbar. Er kann zusätzlich weitere Verstellmöglichkeiten, wie z.B. eine Höhenverstellung und/oder eine Neigungsverstellung aufweisen. In bekannter Weise sind Rückenlehne und Sitzteil über einen Lehnengelenkbeschlag verbunden. Ein derartiger Lehnengelenkbeschlag ist ein einzeln handhabbares Bauteil, das bei der Montage mit dem Sitzteil und der Rückenlehne verbunden wird. Es gibt aber auch mehr oder weniger integrierte Lösungen, bei denen der Lehnengelenkbeschlag mehr oder weniger Teil des Sitzteils oder der Rückenlehne ist.

Ein derartiger Fahrzeugsitz ist aus der WO 2007/0878876 A bekannt, der alle Merkmale des Oberbegriffs des unabhängigen Anspruch 1 offenbart.

Der Lehnengelenkbeschlag ermöglicht eine manuelle oder motorische Neigungsverstellung der Rückenlehne. Zusätzlich hierzu muss er ein Vorklappen der Rückenlehne ermöglichen. Hierzu ist in bekannter Weise an der Rückenlehne eine Handhabe vorgesehen. Sie ist normalerweise in einer Ruheposition. Wird sie betätigt, wird ein rasches Vorklappen der Rückenlehne ermöglicht. Dies ist unabhängig von der Einstellung eines Verstellbeschlages zwischen Rückenlehne und Sitzteil.

Durch das Vorklappen der Rückenlehne wird eine Arretiervorrichtung der Längsverstellung betätigt und freigegeben. Dadurch kann der Sitz in Längsrichtung verschoben werden. Die Ausgangsposition vor der Verschiebung wird durch eine Memoryeinrichtung gespeichert. Wird der Sitz innerhalb der Längsführung wieder zurückgeschoben, stellt die Memoryeinrichtung sicher, dass bei Erreichen der Ausgangsposition die Arretiervorrichtung wieder einrastet.

In der vorgeklappten Position wird die Rückenlehne durch eine geeignete Vorrichtung gehalten. Ein Zurückklappen der Rückenlehne in die ursprüngliche Position, im Folgenden auch Gebrauchsposition genannt, wird erst dann freigegeben, wenn der Kraftfahrzeugsitz die Memoryposition erreicht hat oder zumindest in Nähe dieser ist.

Vorverlagerbare Kraftfahrzeugsitze der bislang beschriebenen Art findet man beispielsweise beschrieben in EP 1 359 051 B1, DE 10 2004 002 728 B3, DE 10 2006 001 530 A1 und DE 100 21 420 C2.

Es besteht nun der Wunsch, die Fixierung der Rückenlehne in der vorgeklappten Position auch dann lösen zu können, wenn die Memoryposition innerhalb der Längsführung noch nicht erreicht ist. Aufgabe der Erfindung ist es daher, den oben beschriebenen Kraftfahrzeugsitz weiterzuentwickeln und zu verbessern.

Diese Aufgabe wird gelöst durch die Merkmale des Patentanspruchs 1.

Bei diesem Kraftfahrzeugsitz wird die Rückenlehne durch das Zusammenwirken von Fanghaken und Gegenhaken in der vorgeklappten Position gehalten. Deren Eingriff miteinander kann nicht nur dadurch aufgehoben werden, dass durch die Memoryeinrichtung und über ein Übertragungsmittel der Gegenhaken freigezogen wird, sondern auch dadurch, dass der Fanghaken durch Betätigen der Handhabe vom Gegenhaken frei kommt. Unabhängig voneinander können Fanghaken und Gegenhaken freigezogen werden. Dabei bleibt bei Freiziehen des Fanghakens die Memoryeinrichtung nach wie vor aktiv, auch wenn sie noch nicht angesprochen hat. Die Ausgangsposition ist nach wie vor gespeichert und die Arretiervorrichtung der Längsführung greift ein, sobald die Ausgangsposition erreicht ist. In einer Alternative kann man den Kraftfahrzeugsitz aber auch so auslegen, dass zwangsläufig beim Zurückklappen der Rückenlehne in die ursprüngliche Position die Arretiervorrichtung der Längsverstellung immer eingreift. Dann wird vermieden, dass die Längsverstellung unarretiert bleibt. Wenn, wie dies vom Stand der Technik üblich ist, die Arretiervorrichtung der Längsführung über einen Bowdenzug mit der Rückenlehne verbunden ist, ist die Arretiervorrichtung zwangsläufig mit der Bewegung der Rückenlehne gekoppelt und wird die Arretiervorrichtung immer dann in Sperrstellung gebracht, wenn die Rückenlehne in Gebrauchsstellung gebracht worden ist.

In einer besonders vorteilhaften Weiterbildung der Erfindung sind Fanghaken und Sperrklinke miteinander bewegungsverbunden. Vorzugsweise sind sie um eine gemeinsame Achse am Beschlagoberteil schwenkbar angeordnet. Dabei ist es vorteilhaft, die Sperrklinke auf der einen Seite des als flaches Teil ausgebildeten Beschlagoberteils vorzusehen und den Fanghaken auf der anderen Seite. Dadurch sind die Verriegelung des Beschlagoberteils gegenüber dem Rückenlehnenarm auf der einen Seite des Beschlags und Fanghaken und Gegenhaken auf der anderen Seite des Beschlags, so dass eine klare Trennung und konstruktive Vereinfachung erreicht wird.

Fanghaken und Gegenhaken befinden sich in derselben Ebene. Es gibt Positionen, wo sie gegeneinander anschlagen und damit kollidieren. Sie bewegen sich in der x-z-Ebene. Ihre Schwenkachsen, nämlich die obere Achse des Fanghakens und die untere Achse des Gegenhakens, verlaufen parallel zueinander und parallel zur γ-Richtung. Vorzugsweise haben Fanghaken und Gegenhaken Anlaufschrägen. Durch diese wird erreicht, dass bei einer Kollision kein Problem auftritt, vielmehr Fanghaken und Gegenhaken zwangsläufig aneinander vorbeibewegt werden.

In einer vorteilhaften Weiterbildung wirken Sperrklinken und Sperrteil nur in einer einzigen Winkelposition von Rückenlehnenarm und Beschlagteil zusammen. Nur in dieser Position können Beschlagoberteil und Rückenlehnenarm miteinander starr verbunden werden. In allen anderen Winkelpositionen ist dies nicht möglich. Dadurch kann die Handhabe freigegeben werden, sobald die Sperrklinke freigezogen wurde und die Rückenlehne etwas nach vorn vorgeklappt wurde. Auf dem weiteren Vorklappweg behindert die Sperrklinke, auch wenn sie am Rückenlehnenarm anliegt, die Vorklappbewegung nicht.

Weitere Vorteile und Merkmale der Erfindung ergeben sich aus den übrigen Ansprüchen sowie der nun folgenden Beschreibung von einem nicht einschränkend zu verstehendem Ausführungsbeispiel der Erfindung, die im Folgenden unter Bezugnahme auf die Zeichnung näher erläutert werden.

In dieser Zeichnung zeigen:
- Fig. 1:: eine prinzipielle Seitenansicht eines vorverlagerbaren Kraftfahrzeugsitzes in Normalposition und bei Ansicht von außen,
- Fig. 2:: die Darstellung des Fahrzeugsitzes nach Figur 1, nun aber bei Ansicht von innen,
- Fig. 3:: eine Ansicht des Lehnengelenkbeschlags des Fahrzeugsitzes wie in Figur 1, nun in vergrößerter Darstellung,

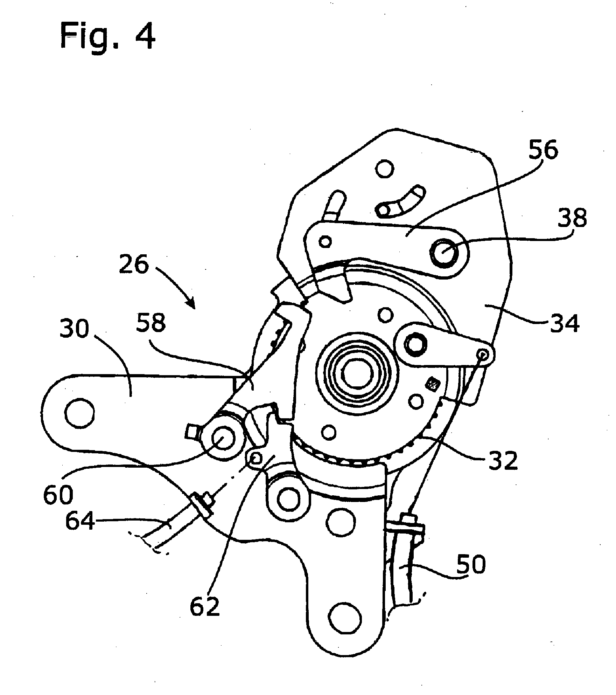

- Fig. 4:: der Lehnengelenkbeschlag nach Figur 3, jedoch nun in der Ansicht von der Innenseite, dies entspricht einer Vergrößerung eines Details der Darstellung des Lehnengelenkbeschlages nach Figur 2,
- Fig. 5:: eine schematische Darstellung des Kraftfahrzeugsitzes nach Figur 1, jedoch nun in vorgeklappter Position der Rückenlehne,
- Fig. 6:: die Darstellung des Lehnengelenkbeschlages nach Figur 2, jedoch nun in der Position entsprechend Figur 5,
- Fig. 7:: die Darstellung des Lehnengelenkbeschlages gemäß Figur 4, jedoch nun in der Position der Rückenlehne gemäß Figur 5,
- Fig. 8:: die Darstellung des Rückenlehnengelenkbeschlages wie in Figur 7, jedoch nunmehr nach Erreichen der Memoryposition und Wegschwenken eines Gegenhakens und

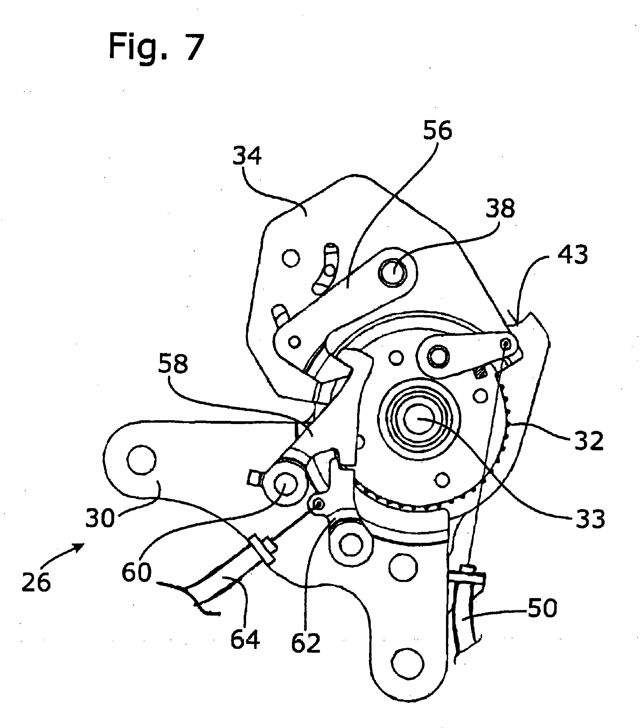

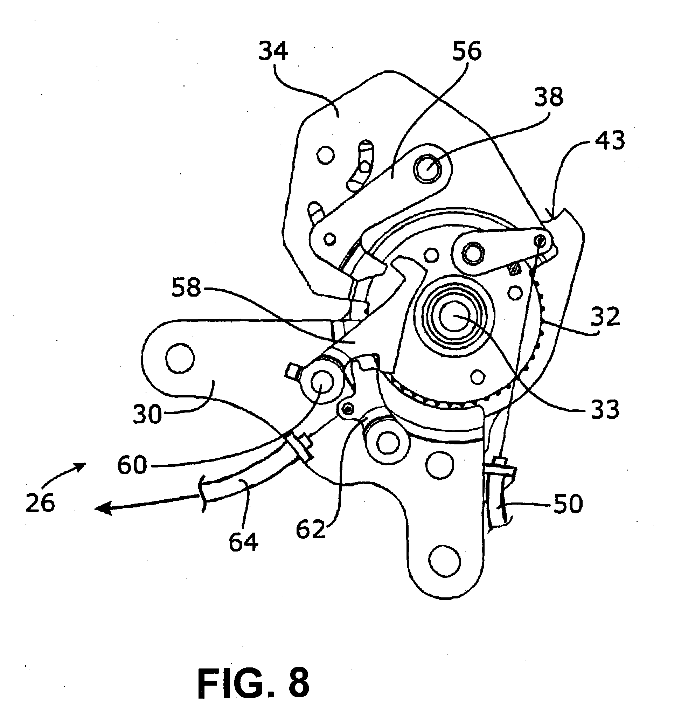

- Fig. 8:: die Darstellung wie in Figur 7, jedoch nunmehr nach Freiziehen eines Fanghakens durch Betätigen einer Handhabe der Rückenlehne.

Der vorverlagerbare Kraftfahrzeugsitz eignet sich insbesondere als Frontsitz eines Kraftfahrzeugs (nicht dargestellt), das nur eine Tür pro Fahrzeugseite hat. Der Kraftfahrzeugsitz hat eine Rückenlehne 20 und ein Sitzteil 22. Das Sitzteil 22 ist in einer einfachen Ausführung gezeigt, es ist unmittelbar über eine an sich bekannte Längsführung 24 mit einer Bodengruppe eines Kraftfahrzeugs verbunden.

Es ist ein Lehnengelenkbeschlag 26 vorgesehen, der als einzeln handhabbares, kompaktes Bauteil ausgeführt ist. Er ist zwischen Rückenlehne 20 und Sitzteil 22 angeordnet und hat geeignete Befestigungsmittel, um jeweils mit diesen Teilen befestigt zu werden. Zu den Befestigungsverfahren gehört auch ein Anschweißen.

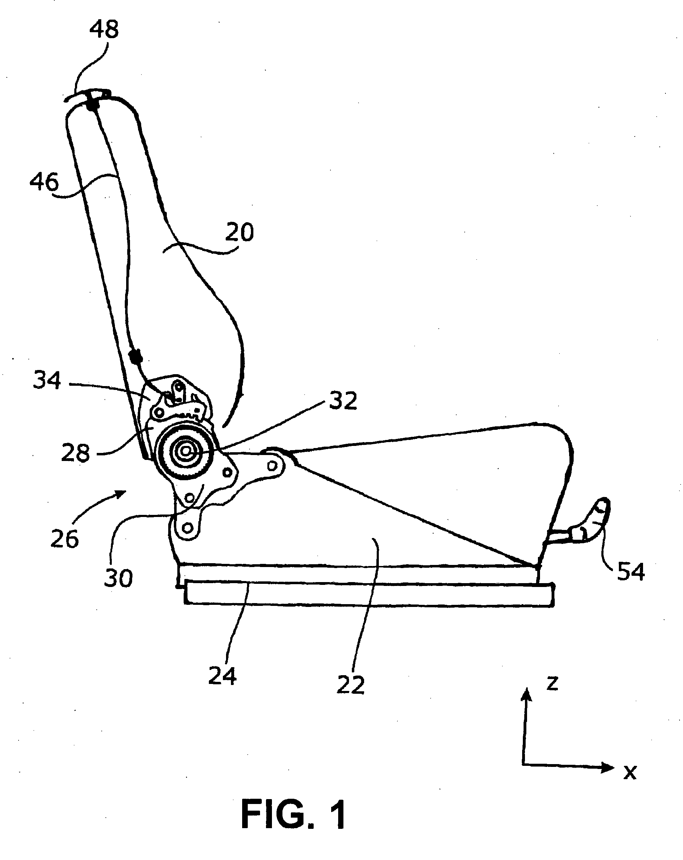

Der Lehnengelenkbeschlag 26 ermöglicht einerseits ein rasches Vorklappen der Rückenlehne 20 auf das Sitzteil 22 zu und andererseits ein Einstellen der Neigung der Rückenlehne 20, dies insbesondere im Bereich der in Figur 1 gezeigten Gebrauchsposition, die auch als ursprüngliche Position bezeichnet wird.

Der Lehnengelenkbeschlag 26 hat einen Rückenlehnenarm 28 und ein dem Sitzteil zugeordnetes Beschlagsunterteil 30. Zwischen beiden ist ein Verstellbeschlag 32 angeordnet. Dadurch kann die Winkelstellung zwischen dem Rückenlehnenarm 28 und dem Beschlagunterteil 30 eingestellt und festgestellt werden. Der Einstellvorgang erfolgt um eine Gelenkachse 33. Der Einstellvorgang ist langsam im Vergleich zu dem Klappvorgang. Verwendet werden kann als Verstellbeschlag 32 eine Ronde üblicher Bauart, beispielsweise ein Taumelgelenkbeschlag, ein Sperrschieber-Gelenkbeschlag, ein Klemmrollen-Gelenkbeschlag oder dergleichen. All dies gehört zum Stand der Technik und muss hier nicht näher erläutert werden.

Weiterhin hat der Lehnengelenkbeschlag 26 ein Beschlagoberteil 34, das der Rückenlehne 20 zugeordnet ist. Dieses Beschlagoberteil 34 ist um die Gelenkachse 33 schwenkbar angeordnet. Es ist normalerweise mit dem Rückenlehnenarm 28 fest verbunden. Hierfür ist am Beschlagoberteil 34 eine Sperrklinke 36 um eine obere Achse 38 schwenkbar. Sie hat eine Verzahnung und eine runde Anschlagflanke 40, die konzentrisch zur oberen Achse 38 ist. Die Sperrklinke 36, genauer gesagt, ihre Verzahnung, wirkt mit einem Sperrteil 42 zusammen, das vom Rückenlehnenarm 28 ausgebildet wird. Es hat eine gerundete, der Anschlagflanke 40 entsprechende Gegenflanke 43 und eine den Zähnen der Sperrklinke 36 angepasste Gegenverzahnung. Der Zahnverlauf ist schräg, so dass bei zunehmendem Eintauchen der Zähne der Sperrklinke 36 in die Gegenverzahnung des Sperrteils 42 die Anschlagflanke 40 mehr und mehr gegen die Gegenflanke 43 gedrückt wird. Alternativ oder ergänzend kann auch die Anschlagflanke und/oder die Gegenflanke etwas exzentrisch sein, so dass eine zunehmende Verklemmung bei zunehmendem Eingriff erzielt wird.

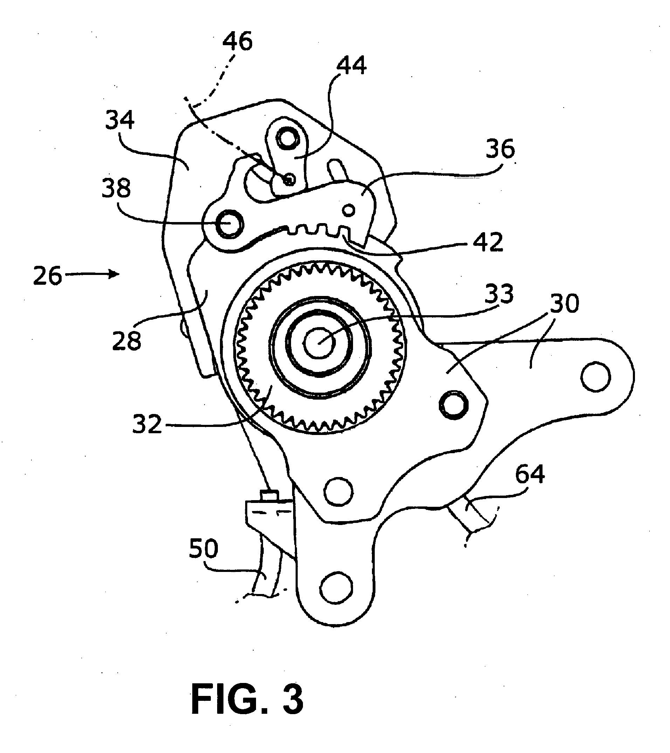

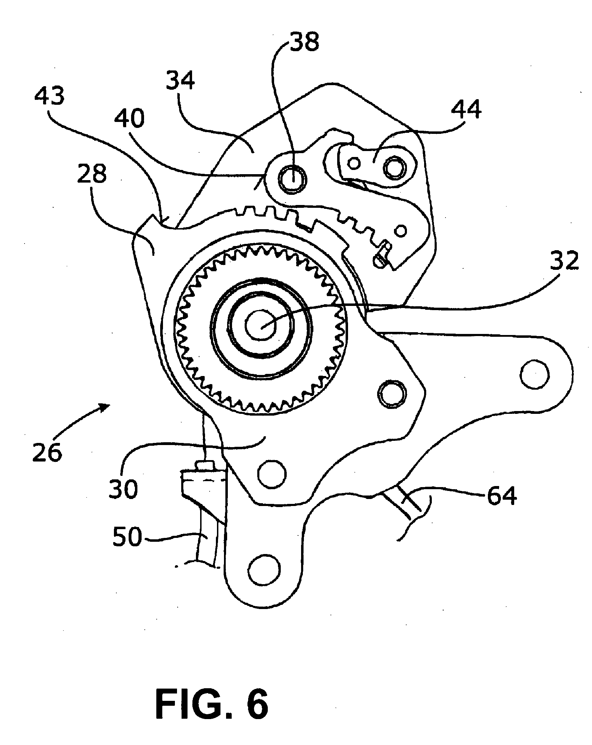

Betätigt wird die Sperrklinke 36 in bekannter Weise durch einen Stellnocken 44, der ebenfalls schwenkbar am Beschlagoberteil angelenkt ist und sich in der gleichen Ebene wie die Sperrklinke 36 bewegt. Diese hat einen Lösearm. Am Stellnocken 44 greift ein Verbindungsmittel 46 in Form eines Seilzugs, Bowdenzugs, eine Stange oder dergleichen an, das an seinem anderen Ende mit einer Handhabe 48 verbunden ist, die an der Rückenlehne 20 vorgesehen ist. Sie wird durch geeignete Mittel in einer Ruheposition gehalten und kann aus dieser durch Betätigung ausgeschwenkt werden. Dabei wird der Stellnocken 44 ausgehend von der Position nach Figur 3 geschwenkt, betätigt die Sperrklinke 36 und es wird die Position gemäß Figur 6 erreicht, wobei die Position gemäß Figur 6 auch noch ein Vorklappen beinhaltet. Wenn die Sperrklinke 46 außer Eingriff mit dem Sperrteil 42 ist, kann der Rückenlehnenarm 28 frei nach vorn um die Gelenkachse geschwenkt werden. Ein gekrümmtes Langloch im Beschlagoberteil (34) begrenzt den Schwenkwinkel der Sperrklinke 36. Der Fanghaken 56 oder die Sperrklinke 36 müssen sich dann nicht bis zur oberen Achse erstrecken, wenn das jeweils andere Teil dies tut.

Sobald das Sperrteil 42 frei ist, kann die Rückenlehne 20 nach vorn geklappt werden. Ein Klappen nach hinten wird durch die Anschlagflanke 40 verhindert. Dadurch wird auch das Rückklappen der Rückenlehne 20 in die ursprüngliche Position begrenzt. Anders ausgedrückt wird die ursprüngliche Position bei einem Zurückklappen wieder aufgefunden.

Ist die Rückenlehne 20 einmal um einen gewissen Schwenkwinkel nach vorn vorgeklappt, wird in an sich bekannter Weise über einen ersten Bowdenzug 50 eine Arretiervorrichtung 52 der Längsführung 24 freigezogen, so dass die Schienen der Längsführung 24 gegeneinander verschoben werden können. Innerhalb der Längsführung 24 kann nun der gesamte Sitz nach vorn geschoben werden. Eine Freigabe der Arretiervorrichtung wird unabhängig auch durch einen Handhebel 24 erreicht, der die normale Betätigung der Arretiervorrichtung 52 bildet.

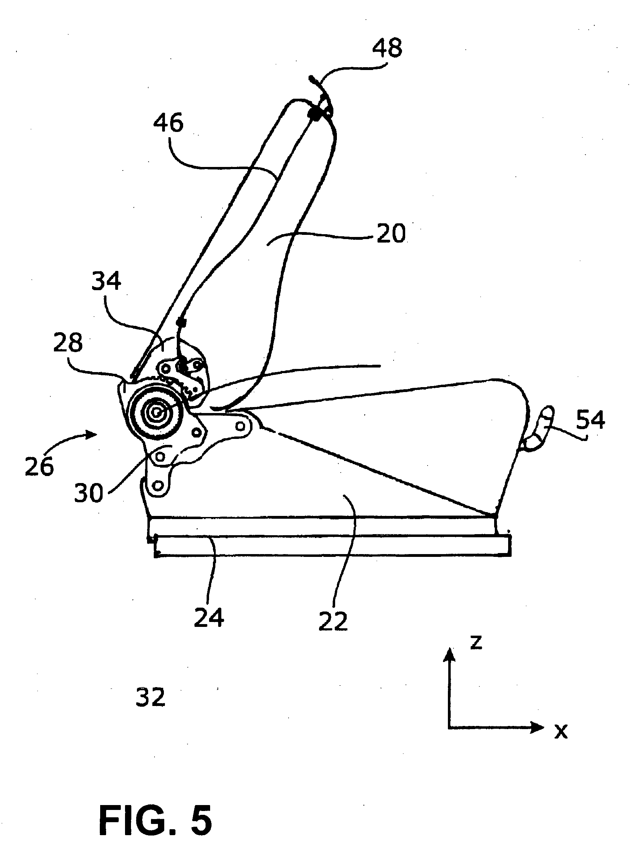

In der oben beschriebenen Position eines freigeschwenkten Sperrteils 42 kann die Rückenlehne 20 bis in die Position gemäß Figur 5 vorgeklappt werden. Diese zeigt die vollständig vorgeklappte Position. Um diese Position zu fixieren bzw. sichern, ist einerseits ein Fanghaken 56 vorgesehen. Er ist auf der Innenseite des als flaches Teil ausgebildeten Beschlagoberteils 34 und um dieselbe Schwenkachse wie die Sperrklinke 36, also um die obere Achse 38, angelenkt. Er befindet sich damit auf der anderen Seite des Beschlagoberteils 34 als Sperrklinke 36. Andererseits ist ein Gegenhaken 58 vorgesehen. Er wirkt mit dem Fanghaken 56 zusammen und ist der am Beschlagunterteil 30 um eine untere Achse 60 schwenkbar angeordnet. Sowohl der Fanghaken 56 als auch der Gegenhaken 58 haben eine Hakenfläche. Die beiden Hakenflächen verlaufen jeweils rechtwinklig zu einer die Hakenfläche schneidenden Radialen oder anders ausgedruckt tangential in Umfangsrichtung. Sie befinden sich zudem in derselben Ebene auf der Innenseite des Innengelenkbeschlages 26. Wenn sie in Eingriff miteinander sind, was Figur 7 zeigt, bilden sie einen Eingriffsbereich. Dieser Eingriffsbereich verläuft in einem rechten Winkel zu einer Verbindungslinie der unteren Achse 60 mit der oberen Achse 38. Dieser Eingriffsbereich liegt zudem in der Mitte zwischen der unteren Achse 60 und der oberen Achse 38. Sowohl die Winkelstellung als auch die beschriebene Position des Eingriffsbereichs sind innerhalb gewisser Grenzen variierbar.

An der Außenseite ihrer Hakenbereiche haben Fanghaken 56 und Gegenhaken 58 jeweils Anschlagflanken, diese sind so geformt, dass Fanghaken 56 und Gegenhaken 58 beim Aufeinandertreffen, also während der Vorklappbewegung, voneinander weggedrückt werden und die in Figur 7 gezeigte Position einnehmen können. Vorteilhafterweise ist der Fanghaken 56 und/oder der Gegenhaken 58 in die in Figur 7 gezeigte Eingriffsstellung elastisch vorbelastet, hierzu sind z.B. geeignete Federn vorhanden.

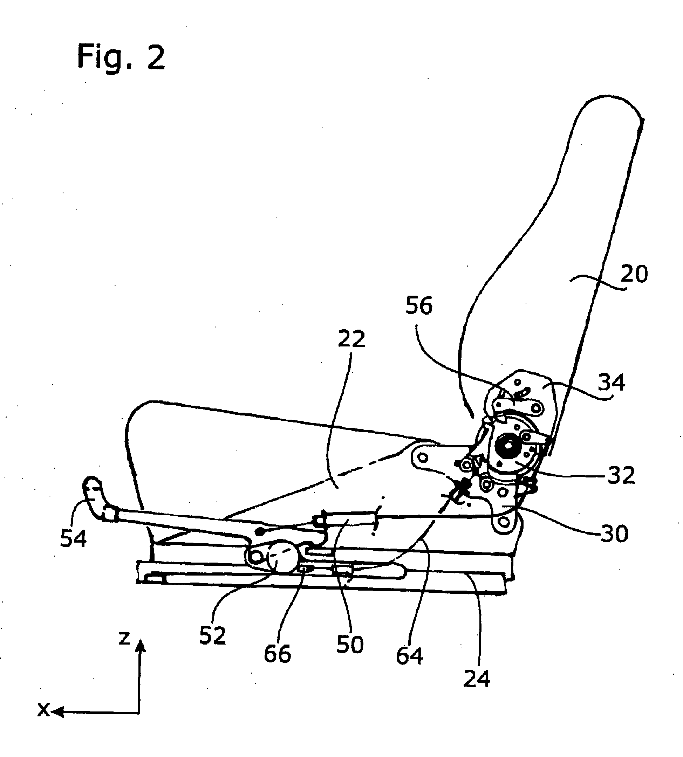

Dem Gegenhaken 58 ist ein Haltearm 62 zugeordnet. Er hat eine Halteflanke, die an einer Rückflanke des Gegenhakens 58 anliegt, wie dies Figur 7 zeigt. Dadurch wird verhindert, dass der Gegenhaken 58 im Uhrzeigersinn frei schwenken kann. Der Haltearm 62 ist mit einem zweiten Bowdenzug 64 verbunden, dieser wiederum ist mit einer Memoryeinrichtung 66 an seinem anderen Ende verbunden. Wird die Memoryposition erreicht, also die Position der Längsführung 24, wie sie in den Figuren 1 und 2 dargestellt ist, zieht der zweite Bowdenzug 64 am Haltearm 62, dieser wird dadurch gegen den Uhrzeigersinn verschwenkt, dadurch ist der Freischwenkweg für den Gegenhaken 58 frei, den nach Freischwenken erreichten Zustand zeigt Figur 8. Ausgehend von diesem Zustand kann die Rückenlehne 20 nun frei nach oben wieder zurück in die ursprüngliche Position geschwenkt werden. Der Fanghaken 56 behält seine Position, wie er sie auch in Figur 7 hat, bei.

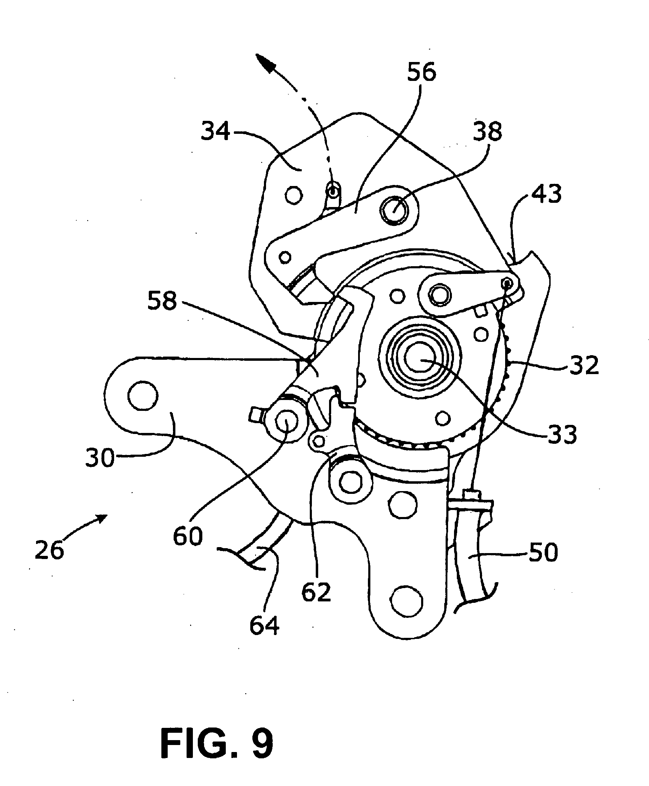

Die Freigabe der Rückenlehne 20 wird erfindungsgemäß unabhängig von der bisher beschriebenen Freigabe auch wie folgt erreicht: Der Fanghaken 56 ist mit der Sperrklinke 36 bewegungsverbunden, dadurch ist er unter der Wirkung des Verbindungsmittels 46 und der Handhabe 48. Wird die Handhabe 48 ausgehend von einem in Figur 7 gezeigten Eingriff von Fanghaken 56 und Gegenhaken 58 zu irgendeinem beliebigen Zeitpunkt betätigt, wird dieser Eingriff aufgehoben. Der Fanghaken 46 wird im Uhrzeigersinn frei geschwenkt und es wird die Position gemäß Figur 9 erreicht. In dieser hat der Gegenhaken noch seine Position, die er auch in Figur 7 hatte, es ist aber nun der Fanghaken 56 außer Eingriff, dadurch kann die Rückenlehne 20 wieder in die ursprüngliche Position zurückverschwenkt werden.

## Patentansprüche

1. Vorverlagerbarer Kraftfahrzeugsitz, insbesondere Frontsitz eines Kraftfahrzeugs, mit nur einer Tür pro Fahrzeugseite, mit einer Rückenlehne (20), mit einem Sitzteil (22) und mit einem die Rückenlehne (20) und das Sitzteil (22) verbindenden Lehnengelenkbeschlag (26), der a) einen Rückenlehnenarm (28), b) ein mit dem Sitzteil verbundenes Beschlagunterteil (30), c) einen Verstellbeschlag (32), der zwischen dem Rückenlehnenarm (28) und dem Beschlagunterteil (30) angeordnet ist, und d) ein mit der Rückenlehne (20) verbundenes Beschlagoberteil (34) aufweist, das um eine Gelenkachse (33) des Verstellbeschlags (32) drehbar ist, wobei am Beschlagoberteil (34) eine Sperrklinke (36) angelenkt ist und am Rückenlehnenarm (28) ein Sperrteil (42) ausgebildet ist, das mit der Sperrklinke (36) normalerweise in Eingriff ist und ein Vorklappen der Rückenlehne (20) sperrt, wobei an der Rückenlehne (20) eine Handhabe (48) für ein Freigeben des Vorklappens vorgesehen ist, die mit der Sperrklinke (36) verbunden ist und bei Betätigung diese Sperrklinke (36) außer Eingriff mit dem Sperrteil (42) bringt, so dass die Rückenlehne (20) vorgeklappt werden kann, wobei ein Fanghaken (56) und ein Gegenhaken (58) vorgesehen sind, Fanghaken (56) und Gegenhaken (58) nur im vorgeklappten Zustand der Rückenlehne (20) in Eingriff sind, wobei eine Memoryeinrichtung (66) einer Längsführung (24) vorgesehen ist, die den vorgeklappten Zustand der Rückenlehne (20) freigibt und der Fanghaken (56) mit der Handhabe (48) verbunden ist und bei Betätigung der Handhabe (48) der Fanghaken (56) vom Gegenhaken (58) freikommt, wobei der Fanghaken (56) am Beschlagoberteil (34) angelenkt ist, der Gegenhaken (58) am Beschlagunterteil (30) angelenkt ist, und der Gegenhaken (58) mit der Memoryeinrichtung (66) verbunden ist, die den Gegenhaken (58) bei Erreichen einer gespeicherten Position vom Fanghaken (56) freizieht, **dadurch gekennzeichnet dass** der Kontakt und Eingriff von Fanghaken (56) und Gegenhaken (58) in einem Eingriffsbereich erfolgt, dass der Fanghaken (56) um eine obere Achse (38) und der Gegenhaken (58) um eine untere Achse (60) schwenkbar ist, und dass der Eingriffsbereich eine Verbindungslinie der unteren Achse (60) mit der oberen Achse (38) schneidet.

2. Vorverlagerbarer Kraftfahrzeugsitz nach Anspruch 1, **dadurch gekennzeichnet, dass** der Fanghaken (56) und die Sperrklinke (36) miteinander bewegungsverbunden sind, und dass der Fanghaken (56) und die Sperrklinke (36) um eine gemeinsame Achse (obere Achse 38) schwenkbar sind.

3. Vorverlagerbarer Kraftfahrzeugsitz nach Anspruch 1 oder 2, **dadurch gekennzeichnet, dass** der Eingriffsbereich die Verbindungslinie der unteren Achse (38) mit der oberen Achse (60) in einem Winkel von 90° +/- 20° schneidet, vorzugsweise in einem Winkel von 90° +/- Selbsthemmung der verwendeten Materialien schneidet.

4. Vorverlagerbarer Kraftfahrzeugsitz nach Anspruch 3, **dadurch gekennzeichnet, dass** der Eingriffsbereich auf der Mitte zwischen der oberen Achse (38) und der unteren Achse (60) liegt.

5. Vorverlagerbarer Kraftfahrzeugsitz nach einem der vorangegangenen Ansprüche, **dadurch gekennzeichnet, dass** dem Gegenhaken (58) ein Haltearm (62) zugeordnet ist, der am Beschlagunterteil (30) angelenkt ist, und dass dieser Haltearm (62) über ein Zugmittel mit einer Memoryeinrichtung (66) verbunden ist.

6. Vorverlagerbarer Kraftfahrzeugsitz nach einem der vorangegangenen Ansprüche, **dadurch gekennzeichnet, dass** die Sperrklinke (36) und das Sperrteil (42) nur in einer einzigen Winkelposition von Rückenlehnenarm (28) und Beschlagoberteil (34) miteinander in Eingriff sind und sonst nicht in Eingriff sind.

7. Vorverlagerbarer Kraftfahrzeugsitz nach einem der vorangegangenen Ansprüche, **dadurch gekennzeichnet, dass** der Fanghaken (56) und/oder der Gegenhaken (58) eine Anlaufschräge aufweisen.

8. Vorverlagerbarer Kraftfahrzeugsitz nach einem der vorangegangenen Ansprüche, **dadurch gekennzeichnet, dass** der Fanghaken (56) um eine obere Achse (38) und der Gegenhaken (58) um eine untere Achse (60) schwenkbar ist, und dass der Abstand der eine oberen Achse von der Gelenkachse (33) im Wesentlichen dem Abstand des Gegenhakens (58) von der unteren Achse entspricht, jedenfalls vorzugsweise sich beide Abstände um maximal 20%. insbesondere 10% unterscheiden.

9. Vorverlagerbarer Kraftfahrzeugsitz nach einem der vorangegangenen Ansprüche, **dadurch gekennzeichnet, dass** der Sperrklinke (36) ein Stellnocken (44) zugeordnet ist, und dass die Handhabe (48) über ein Verbindungsmittel (46), insbesondere einen Seilzug, mit dem Stellnocken (44) verbunden ist.

10. Vorverlagerbarer Kraftfahrzeugsitz nach einem der vorangegangenen Ansprüche, **dadurch gekennzeichnet, dass** die Sperrklinke (36) auf einer Seite des Beschlagoberteils (34) und der Fanghaken (56) auf der anderen Seite des Beschlagoberteils (34) angeordnet ist.

11. Vorverlagerbarer Kraftfahrzeugsitz nach einem der vorangegangenen Ansprüche, **dadurch gekennzeichnet, dass** die Sperrklinke (36) eine Anschlagflanke (40) hat, die konzentrisch zur oberen Achse (38) ist, und dass der Rückenlehnenarm (28) eine Gegenflanke (43) aufweist.

## Claims

1. A forwardly displaceable motor vehicle seat, in particular front seat of a motor vehicle with only one door per vehicle side, comprising a backrest (20), a seat part (22) and a backrest hinge fitting (26), which connects the backrest (20) and the seat part (22) and which comprises a) a backrest arm (28), b) a bottom fitting section (30) connected to the seat part, c) an adjustment fitting (32) disposed between the backrest arm (28) and the bottom fitting section (30), and d) a top fitting section (34), which is connected to the backrest (20) and which is rotatable about a hinge axis (33) of the adjustment fitting (32), with a blocking pawl (36) being hinged to the top fitting section (34) and a blocking part (42) being formed on the backrest arm (28), which is normally in engagement with the blocking pawl (36) and blocks a folding forward of the backrest (20), with a handle (48) for enabling the forward-folding being provided on the backrest (20), which is connected to the blocking pawl (36) and, upon actuation of this blocking pawl (36), brings it out of engagement with the blocking part (42), so that the backrest (20) can be folded forward, with a catch hook (56) and a counter-hook (58) being provided, the catch hook (56) and counter-hook (58) being in engagement only in the folded-forward state of the backrest (20), with a memory device (66) of a longitudinal guide (24) being provided which enables the folded-forward state of the backrest (20), and the catch hook (56) being connected to the handle (48) and the catch hook (56) being released from the counter-hook (58) upon actuation of the handle (48), the catch hook (56) being hinged to the top fitting section (34), the counter-hook (58) being hinged to the bottom fitting section (30), and the counter-hook (58) being connected to the memory device (66) which pulls the counter-hook (58) free from the catch hook (56) upon reaching a stored position, **characterised in that** the contact and engagement of the catch hook (56) and the counter-hook (58) takes place in an engagement region, that the catch hook (56) is pivotable about an upper axis (38) and the counter-hook (58) about a lower axis (60), and that the engagement region intersects a connecting line of the lower axis (60) with the upper axis (38).

2. The forwardly displaceable motor vehicle seat according to claim 1, **characterised in that** the catch hook (56) and the blocking pawl (36) are motion-linked and that the catch hook (56) and the blocking pawl (36) are pivotable about a common axis (upper axis 38).

3. The forwardly displaceable motor vehicle seat according to claim 1 or 2, **characterised in that** the engagement region intersects the connecting line of the lower axis (38) with the upper axis (60) at an angle of 90° +/- 20°, preferably intersects it at an angle of 90° +/- self-locking action of the materials used.

4. The forwardly displaceable motor vehicle seat according to claim 3, **characterised in that** the engagement region is located in the middle between the upper axis (38) and the lower axis (60).

5. The forwardly displaceable motor vehicle seat according to any one of the preceding claims, **characterised in that** a retaining arm (62), which is hinged to the bottom fitting section (30), is allocated to the counter-hook (58), and that this retaining arm (62) is connected to a memory device (66) via a pulling means.

6. The forwardly displaceable motor vehicle seat according to any one of the preceding claims, **characterised in that** the blocking pawl (36) and the blocking part (42) are in engagement only in a single angle position of the backrest arm (28) and the top fitting section (34), and are otherwise not in engagement with each other.

7. The forwardly displaceable motor vehicle seat according to any one of the preceding claims, **characterised in that** the catch hook (56) and/or the counter-hook (58) comprise a run-up slope.

8. The forwardly displaceable motor vehicle seat according to any one of the preceding claims, **characterised in that** the catch hook (56) is pivotable about an upper axis (38) and the counter-hook (58) about a lower axis (60), and that the distance of the upper axis from the joint axis (33) substantially corresponds to the distance of the counter-hook (58) from the lower axis, in any case, that the two distances preferably differ by maximally 20%, in particular 10%.

9. The forwardly displaceable motor vehicle seat according to any one of the preceding claims, **characterised in that** an adjusting cam (44) is allocated to the blocking pawl (36), and that the handle (48) is connected to the adjusting cam (44) via a connecting means (46), preferably a cable.

10. The forwardly displaceable motor vehicle seat according to any one of the preceding claims, **characterised in that** the blocking pawl (36) is disposed on one side of the top fitting section (34) and the catch hook (56) on the other side of the top fitting section (34).

11. The forwardly displaceable motor vehicle seat according to any one of the preceding claims, **characterised in that** the blocking pawl (36) comprises a stop flank (40) concentric with the upper axis (38), and that the backrest arm (28) comprises a counter-flank (43).

## Revendications

1. Siège de véhicule automobile rabattable, notamment siège avant d'un véhicule automobile, comportant seulement une portière par côté du véhicule, avec un dossier (20), avec une partie de siège (22) et avec une ferrure d'articulation pour dossier (26) reliant le dossier (20) et le bras de dossier (28), qui a) présente un bras de dossier (28), b) une pièce inférieure de ferrure (30) reliée à la partie de siège, c) une ferrure de réglage (32), qui est disposée entre le bras de dossier (28) et la partie inférieure de ferrure (30), et d) une partie supérieure de ferrure (34) reliée au dossier (20), dans lequel sur la partie supérieure de ferrure (34) un cliquet (36) est raccordé de manière articulée et sur le bras de dossier (28) une partie de blocage (42) est réalisée, qui vient normalement en prise avec le cliquet (36) et bloque un basculement du dossier (20), dans lequel sur le dosseur (20) une manette (48) permettant un déblocage du basculement du dossier es prévue, qui est reliée au cliquet (36) et lors de l'actionnement ce cliquet (36) est désengagé de la partie de blocage (42), de sorte que le dossier (28) puisse être basculé, dans lequel un crochet de préhension (56) et un contre-crochet (58) sont prévus, le crochet de préhension (56) et le contre-crochet (58) sont amenés en prise seulement en l'état basculé du dossier (20), dans lequel un dispositif de mémoire (66) d'une glissière longitudinale (24) est prévu, qui débloque l'état basculé du dossier (20) et le crochet de préhension (56) est relié à la manette (48) et lors de l'actionnement de la manette (48) dégage le crochet de préhension (56) du contre-crochet (58), dans lequel le crochet de préhension (56) est raccordé de manière articulée à la partie supérieure de ferrure (34), le contre-crochet (58) est raccordé de manière articulée à la partie inférieure de ferrure (30) et le contre-crochet (58) est relié au dispositif de mémoire (66), qui libère le contre-crochet (58) du crochet de préhension (56) quand une position mémorisée est atteinte, **caractérisé en ce que** le contact et la mise en prise du crochet de préhension (56) et du contre-crochet (58) a lieu dans une zone de mise en prise, **en ce que** le crochet de préhension (56) est pivotant autour d'un axe supérieur (38) et le contre-crochet (58) autour d'un axe inférieur (60), et **en ce que** la zone de mise en prise coupe une ligne de liaison de l'axe inférieur (60) avec l'axe supérieur (38).

2. Siège de véhicule automobile rabattable selon la revendication 1, **caractérisé en ce que** le crochet de préhension (56) et le cliquet (36) sont reliés en mouvement l'un à l'autre, et le crochet de préhension (56) et le cliquet (36) sont pivotants autour d'un axe commun (axe supérieur 38).

3. Siège de véhicule automobile rabattable selon les revendications 1 ou 2, **caractérisé en ce que** la zone de mise en prise coupe la ligne de liaison de l'axe inférieur (38) avec l'axe supérieur (60) dans un angle de 90° +/- 20°, de préférence dans un angle de ±90° d'auto blocage des matériaux utilisés.

4. Siège de véhicule automobile rabattable selon la revendication 3, **caractérisé en ce que** la zone de mise en prise se situe au centre entre l'axe supérieur (38) et l'axe inférieur (60).

5. Siège de véhicule automobile rabattable selon une des revendications précédentes, **caractérisé en ce que** au contre-crochet (58) est coordonné un bras de retenue (62), qui est raccordé de manière articulée à la pièce inférieur de ferrure (30) et **en ce que** le ras de retenue (62) est retenu par l'intermédiaire d'un moyen de traction à un dispositif de mémoire (66).

6. Siège de véhicule automobile rabattable selon une des revendications précédentes, **caractérisé en ce que** le cliquet (36) et la pièce de blocage (42) sont mis en prise l'un avec l'autre seulement dans une position angulaire unique du bras de dossier (28) et de la pièce supérieure de ferrure (34) et sinon ne sont pas mis en prise.

7. Siège de véhicule automobile rabattable selon une des revendications précédentes, **caractérisé en ce que** le crochet de préhension (56) et/ou le contre-crochet (58) présentent un chanfrein d'attaque.

8. Siège de véhicule automobile rabattable selon une des revendications précédentes, **caractérisé en ce que** le crochet de préhension (56) est pivotant autour d'un axe supérieur (38) et le contre-crochet (58) autour d'un axe inférieur (60), et l'espacement d'un axe supérieur par rapport à l'axe d'articulation (33) correspond essentiellement à l'espacement du crochet-crochet (58) par rapport à l'axe inférieur, de préférence et dans tous les cas les deux espacements se différencient au maximum de 20%, notamment 10%.

9. Siège de véhicule automobile rabattable selon une des revendications précédentes, **caractérisé en ce que** le cliquet (36) est coordonné à une came de réglage (44), et la manette (48) est reliée par l'intermédiaire d'un moyen de liaison (46), notamment d'un câble de traction, à la came de réglage (44).

10. Siège de véhicule automobile rabattable selon une des revendications précédentes, **caractérisé en ce que** le cliquet (36) est disposé sur un côté de la partie supérieure de ferrure (34) et le crochet de préhension (56) est disposé sur l'autre côté de la partie supérieure de ferrure (34).

11. Siège de véhicule automobile rabattable selon une des revendications précédentes, **caractérisé en ce que** le cliquet (36) possède un flanc de butée (40), qui est concentrique à l'axe supérieur (38) et le bras de dossier (28) présente un contre-flanc (43).
